# EUROPÄISCHE PATENTANMELDUNG

(11) **EP 1 724 032 A2**
(43) Veröffentlichungstag der Anmeldung: **22.11.2006**
(21) Anmeldenummer: 06010008.8
(22) Anmeldetag: 16.05.2006
(51) Int. Cl.: B08B 13/00, B08B 9/08, E03F 7/00, E03C 1/30

(54) **Verfahren und Einrichtung zur Überwachung einer Reinigungsanlage für Behälter**

(30) Priorität: 20.05.2005 DE 102005023269
(71) Anmelder: KSB Aktiengesellschaft, 67227 Frankenthal (DE)
(72) Erfinder: Szlama, Peter, 76751 Jockgrim (DE); Connrad, Klaus, 63477 Maintal (DE)

(57) **Zusammenfassung**

Gegenstand der Erfindung ist ein Verfahren zur Überwachung und Unterstützung der Wartung einer Reinigungs- und/oder Belüftungsanlage für einen Behälter (13), der der Aufnahme und zeitweiligen Speicherung von verunreinigtem Wasser dient, wobei die Reinigungsanlage ein oder mehrere Aggregate (2) umfaßt, welche im Behälter (13) befindliches Wasser ansaugen und in Form eines Strahles in den Behälter (13) ausbringen. Außerdem betrifft die Erfindung eine in verschiedenen Alternativen verwirklichbare Einrichtung zur Durchführung des Verfahrens.

Ziel der Erfindung ist es, dem bei Anlagen der genannten Art vorhandenen Problem von Betriebsstörungen, die vor allem Verstopfungen hervorgerufen werden, bereits bei einer sich anbahnenden Störung zu begegnen.

Dies wird erfindungsgemäß dadurch erreicht, daß jeweils innerhalb des von einem Aggregat (2) erzeugten Flüssigkeitsstroms das Strömungsverhalten der Flüssigkeit überwacht wird (Fig. 1).

## Beschreibung

Die Erfindung betrifft ein Verfahren zur Überwachung und Unterstützung der Wartung einer Reinigungs- und/oder Belüftungsanlage für einen Behälter, der der Aufnahme und zeitweiligen Speicherung von verunreinigtem Wasser dient, wobei die Reinigungsanlage ein oder mehrere Aggregate umfaßt, welche im Behälter befindliches Wasser ansaugen und in Form eines Strahles in den Behälter ausbringen. Außerdem bezieht sich die Erfindung auf eine in verschiedenen Varianten zu verwirklichende Einrichtung zur Durchführung des Verfahrens.

Neben Anlagen mit Mischern oder Rührern werden vor allem solche Reinigungsanlagen eingesetzt, die mit Pumpen bestückt sind, welche das Wasser des Behälters ansaugen und über eine oder mehrere Rohrleitungen in den Behälter zurückfördern. Dabei können im übrigen mit Injektordüsen bestückte Rohrleitungsabschnitte vorgesehen sein, in welche Außenluft in den Förderstrahl der Kreiselpumpe eingesaugt wird, um so eine Belüftung und eine Verbesserung der Reinigungsleistung am Behälterboden zu erreichen.

Derartige Reinigungsanlagen sind unter anderem durch die DE 199 55 424 C2 und die EP 1 039 053 B1 bekannt. Sie werden bevorzugt in Schmutzwasserbehältern und Regenüberlaufbecken eingesetzt. Da sie für die Reinigung bzw. Belüftung das im jeweiligen Behälter befindliche, mit Schwebstoffen belastete Wasser verwenden, besteht die Gefahr, daß Engstellen im Förderweg des Wassers, also vor allem die Düsen, durch sich anlagernde Schmutzteile verstopft werden. Der Prozeß der Verstopfung ist meist schleichend. Da die verstopfungsgefährdeten Teile der Reinigungs- oder Belüftungsanlage unterhalb des zumindest zeitweise vorhandenen Wasserspiegels liegen, ist eine Kontrolle durch Augenscheinnahme nicht immer möglich. Deshalb wird eine Verstopfung oft erst dann erkannt, wenn bereits ein vollständiger Verschluß eingetreten ist. Die Folge ist ein Totalausfall der Reinigungsanlage.

Sofern in einer solchen Reinigungsanlage Kreiselpumpen mit Freistromlaufrädern verwendet werden, kann eine fortschreitende Verstopfung durch eine Kontrolle des Antriebsmotors der Pumpe festgestellt werden. Die sich in der Rohrleitung ergebende Veränderung führt nämlich zu einer veränderten Stromaufnahme des Motors. Eine dem Motor optional zugeordnete Steuereinheit wäre in der Lage, dies zu erfassen und ein geeignetes Signal auszulösen.

Wird allerdings bei der verwendeten Pumpe eine andere Art der Hydraulik eingesetzt, so kann dies zur Folge haben, daß eine Überwachung in der vorstehend geschilderten Weise nicht möglich ist, weil sich ergebende Änderungen nicht meßtechnisch eindeutig erfaßt werden können. Dies ist unter anderem bei Kreiselpumpen mir Diagonalrädern der Fall, die zunehmend in Reinigungsanlagen der genannten Art eingesetzt werden.

Neben Verstopfungen können selbstverständlich auch andere Störungen auftreten, die die Belüftungs- und Reinigungsleistung eines Aggregates der eingangs genannten Art beeinträchtigen. Und selbstverständlich können nicht nur bei Kreiselpumpen derartige Störungen auftreten. So wird beispielsweise die Förderleistung von Mischern und Rührern durch langfaserige Bestandteile in dem gespeicherten Wasser herabgesetzt, wenn diese sich an rotierenden Teilen der Aggregate verfangen.

Danach liegt der Erfindung die Aufgabe zugrunde, ein Verfahren und eine Einrichtung zu schaffen, die eine Überwachung mit frühzeitiger Feststellung von Störungen und damit eine rechtzeitige Wartung ermöglichen.

Die gestellte Aufgabe wird erfindungsgemäß dadurch gelöst, daß jeweils innerhalb des von einem Aggregat erzeugten Flüssigkeitsstroms das Strömungsverhalten der Flüssigkeit überwacht wird.

Die Erfindung nutzt den Umstand, daß schon vergleichswese geringe Anlagerungen von Schwebteilen innerhalb des Förderbereiches, vor allem an Engstellen des Strömungsweges zu einer Veränderung des Strömungsverhaltens der Flüssigkeit führen. Eine solche Veränderung läßt sich anhand verschiedener Parameter, ja sogar anhand optisch erkennbarer Merkmale feststellen. Dies bedeutet, daß auch verschiedene Bereiche innerhalb des Strömungsweges und verschiedene Methoden zur eindeutigen Feststellung eingetretener Störungen geeignet sind.

Für alle verwendbaren Aggregate gilt, daß die Überwachung des Flüssigkeitsstroms anhand des vom Aggregat erzeugten Strahls erfolgen kann. Bei einer hier vorgeschlagenen Einrichtung zur Durchführung des erfindungsgemäßen Verfahrens geschieht dies durch einen am Boden des Behälters angeordneten, den vom Aggregat ausgebrachten Strahl überwachenden Strömungswächter.

In einer weiteren vorteilhaften Ausgestaltung des erfindungsgemäßen Verfahrens wird vorgeschlagen, daß bei Verwendung einer Kreiselpumpe als Strahl ausbringendes Aggregat das Saugverhalten der Kreiselpumpe im Ansaugbereich überwacht wird. Auch an dieser Stelle ist bereits eine eindeutige Feststellung eingetretener Störungen möglich, da auch eine im weiteren Verlauf des Strömungsweges vorhandenes Beeinträchtigung des Strömungsverhaltens auf das Saugverhalten der Pumpe zurückwirkt.

Oft ist es von Vorteil, eine Überwachung der Strömung innerhalb der Rohrleitung vorzunehmen. Bevorzugt geschieht dies durch eine Messung in der zwischen der Kreiselpumpe und einer Engstelle verlaufenden Rohrleitung. Dabei kann sowohl eine Messung, die das Strömungsverhalten direkt erfaßt, als eine Messung, die das Strömungsverhalten indirekt, d.h. in Verbindung mit einem Rechenverfahren, erfaßt, angewandt werden.

Für die Messung können verschiedene Instrumente eingesetzt werden. Eine Möglichkeit besteht darin, das Strömungsverhalten der Flüssigkeit in der Rohrleitung durch einen oder mehrere Drucksensoren zu überwachen. Ebenso können eine oder mehrere Strömungswächter eingesetzt werden. Insbesondere bei Schmutzwasser mit faserigen Bestandteilen sind aber solche Sensoren und Strömungswächter zu bevorzugen, die keine in die Strömung hineinragenden Teile besitzen, die also einen ebenen Übergang zur Rohrwandung haben oder, noch besser, auf der Außenseite des Rohres angebracht sind.

Bevorzugt wird ein außen angebrachter Ultraschall-Strömungssensor, der über eine elektrische Leitung mit einem Anzeigegerät verbunden ist. Derartige Sensoren sind aus einer Vielzahl von Veröffentlichungen bekannt. Als Beispiel sei hier die DE 102 58 997 A1 genannt.

In weiterer Ausgestaltung der Erfindung wird vorgeschlagen, ein Anzeigegerät zu verwenden, welches in Abhängigkeit voreingestellter Meßwerte die durch die Überwachung gelieferten Meßdaten als Betriebszustände "Einwandfreier Durchfluß", "Teilweise Verstopfung" und "Betriebsstörung / Verstopfung" anzeigt. Hierdurch ist jederzeit eine Kontrolle über den Zustand der Anlage und vor allem ein rechtzeitiges Eingreifen bei sich ergebenden Veränderungen möglich.

Die Anzeige des jeweiligen Strömungszustandes kann in einem separaten Gerät für eine Düse, aber auch in einem zentral angeordneten Gerät für mehrere Düsen oder gar mehrere Anlagen gleichzeitig erfolgen. Empfohlen wird eine durch einen Computer gestützte Überwachung, wobei die überwachten Teile der Anlage bzw. Anlagen über einen Datenbus mit dem Computer verbunden sind. Selbstverständlich kann auch eine über Funk oder das Internet erfolgende Überwachung vorgesehen werden.

Wie bereits im Zusammenhang mit der Möglichkeit eines schnellen Eingreifens angesprochen, beschränken sich die Besonderheiten der erfindungsgemäßen Einrichtung nicht auf eine reine Überwachung. Überdies erlaubt die Einrichtung auch eine Wartung, mit der bereits geringe negative Veränderungen zu beseitigen und ein Betrieb mit bestmöglicher Wirkung zu erreichen ist. Eine dies erleichternde vorteilhafte Ausgestaltung der Erfindung ergibt sich dadurch, daß in dem jeweils einer Engstelle, insbesondere einer Düse vorgelagerten Rohrbereich ein Putzstück angeordnet ist, nach dessen Öffnen etwaige Verstopfungen in diesem Bereich zu beseitigen sind.

Anhand eine Ausführungsbeispiels wird die Erfindung näher erläutert. Es zeigt
- Fig. 1: eine mit einer Kreiselpumpe ausgestattete Beckenreinigungs- und belüftungsanlage, die von einer erfindungsgemäßen Einrichtung überwacht wird;
- Fig. 2: eine Beckenreinigungs- und belüftungsanlage mit einer Mehrzahl von Düsen, welche sämtlich von einer erfindungsgemäßen Einrichtung überwacht werden.

Die auf dem Boden 1 eines - nicht dargestellten - Regenüberlaufbeckens angeordnete Kreiselpumpe 2 besitzt ein Saugrohr 3, über das sie Wasser aus dem Becken ansaugt. Das von der Kreiselpumpe 2 mit Druck beaufschlagte Wasser wird über ein Rohr 4, ein Putzstück 5, eine Injektordüse 6 und ein Strahlrohr 7 in das Becken zurückgefördert. Bei diesem Vorgang wird Luft über ein Luftsaugrohr 8, welches über den höchstmöglichen Wasserstand des Beckens hinausragt, in die Injektordüse 6 gesaugt und mit dem geförderten Wasser vermischt. Somit tritt am Strahlrohr 7 ein Wasser-Luft-Gemisch aus.

Aufgrund des Umstandes, daß das im Regenüberlaufbecken befindliche Wasser mit Verunreinigungen versetzt ist, ergeben sich zwei Problemzonen für die Reinigungsanlage: Dies sind der Ansaugbereich 9 am Eintritt in das Saugrohr 3 und der Bereich vor der Injektordüse 6. Vor allem im letztgenannten Bereich, der eine erhebliche Engstelle bildet, kann es zu Anlagerungen von Schmutz kommen, wobei insbesondere faserige Bestandteile sehr leicht zum Hängenbleiben neigen. Hieraus kann sich eine zunehmende Verstopfung ergeben, die zu einer Verschlechterung der Belüftungs- und Reinigungsleistung und schließlich zu einer Verstopfung, also einem Ausfall der Anlage führt.

Durch einen auf der Außenwand des Rohres 4 befestigten Ultraschall-Strömungssensor 10 wird die während des Betriebs der Kreiselpumpe 2 vorhandene Strömung überwacht. Dies geschieht dadurch, daß ein Ultraschallsignal in die strömende Flüssigkeit gesendet, dort reflektiert und im Sensor wieder aufgefangen wird. Ein aus dem Signal gebildeter Meßwert gibt Aufschluß über die Strömungsgeschwindigkeit. Da die Strömung im Rohr 4 nicht nur von etwaigen Verstopfungen an der Injektordüse 6, sondern Veränderungen im gesamten Förderbereich der Kreiselpumpe 2 beeinflußt wird, erfaßt der Strömungssensor 6 auch an anderer Stelle, also z.B. im Ansaugbereich 9 auftretende Störungen.

Über ein Sensorkabel 11 übermittelt der Strömungssensor 6 den jeweiligen Betriebszustand an ein Anzeigegerät 12, welches in seiner Anzeigefunktion ähnlich gestaltet ist wie eine Verkehrsampel: Konstant grünes Licht deutet auf einen einwandfreien Betrieb hin, gelb blinkendes Licht zeigt eine Teilverstopfung an und konstant rotes Licht warnt bei einer Betriebsstörung, die vor allem durch eine Verstopfung ausgelöst worden sein kann. Anstelle eines solchen Anzeigegerätes kann selbstverständlich auch ein beliebiges anderes Gerät, beispielsweise ein Computer, verwendet werden. Statt einer lautlosen Anzeige kann natürlich auch eine ein Warnsignal abgebende Einrichtung verwendet werden.

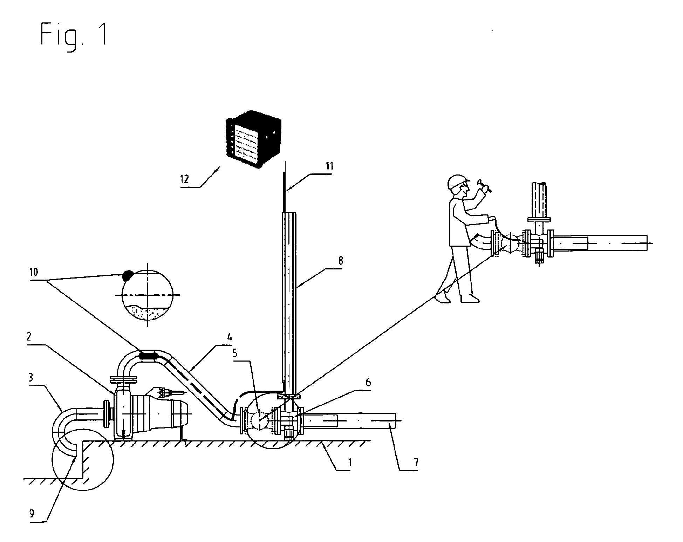

Da das Anzeigegerät 12 Störungen bereits frühzeitig meldet, kann die Ursache einer Störung ohne großen Aufwand behoben werden. Meist genügt es, zunächst eine Sichtkontrolle im Ansaugbereich 9 vorzunehmen und anschließend das Putzstück 5 zu öffnen, um die vor der Injektordüse abgelagerten Stoffe zu entfernen. Das kleine gerahmte Bild in Fig. 1 zeigt dies in symbolischer Form.

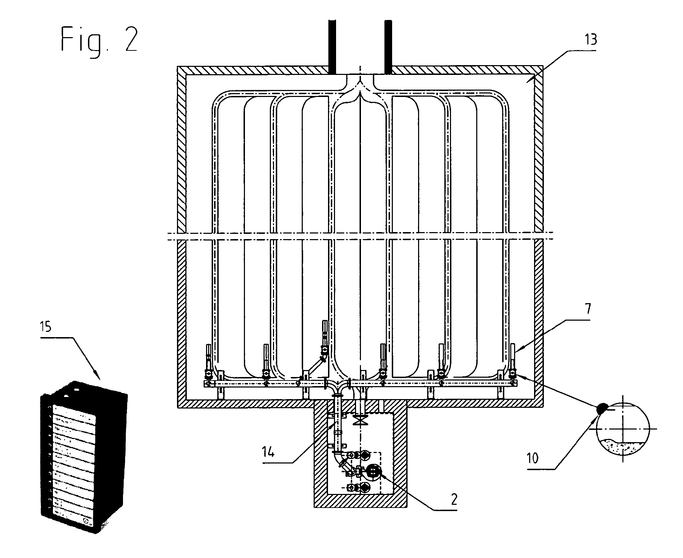

In der Fig. 2 ist eine in einem Höckerbecken 13 angeordnete Reinigungsanlage dargestellt. Die Reinigungsanlage ist mit sechs Strahlrohren 7 ausgestattet, die über Rohrleitungen 14 mit einer Kreiselpumpe 2 verbunden sind. Sämtlichen Strahlrohren 7 sind Putzstücke 5 und Injektordüsen 6 vorgeschaltet; somit entsprechen der Aufbau und die Wirkungsweise jeder Strahleinheit im Prinzip der Anlage der Fig. 1. Überdies ist jeder Strahleinheit ein eigener Strömungssensor 10 zugeordnet, so daß bei einer Verstopfung der Störbereich unmittelbar geortet werden kann: zeigt nur ein Strömungssensor 10 eine Störung an, so ist von einer Verstopfung der diesem Sensor 10 nachgeschalteten Injektordüse 6 auszugehen; signalisieren dagegen alle Sensoren eine Störung, so ist eine Verstopfung im Ansaugbereich 9 wahrscheinlich.

Auch hier wird die jeweilige Störung an einem Anzeigegerät 15 gemeldet, wobei das hier dargestellte Gerät 15 über Anzeigefelder für jede einzelne Strahleinheit verfügt. Auch hier gilt, daß ebenso andere Anzeigegeräte eingesetzt werden können. Statt einer Übermittlung der Sensorsignale über einzelne Kabel 11 kann auch eine Übermittlung über Funk oder über einen Datenbus an einen Computer erfolgen. Ebenso kann eine Meldung über das Internet an eine entfernte Überwachungszentrale, in der nach Möglichkeit mehrere Einrichtungen gleichzeitig kontrolliert werden, erfolgen.

Für die Wartung oder Störungsbeseitigung gelten bei der Anlage der Fig. 2 die prinzipiell gleichen Schritte wie bei der Anlage der Fig. 1

## Patentansprüche

1. Verfahren zur Überwachung und Unterstützung der Wartung einer Reinigungs- und/oder Belüftungsanlage für einen Behälter (13), der der Aufnahme und zeitweiligen Speicherung von verunreinigtem Wasser dient, wobei die Reinigungsanlage ein oder mehrere Aggregate (2) umfaßt, welche im Behälter (13) befindliches Wasser ansaugen und in Form eines Strahles in den Behälter (13) ausbringen, **dadurch gekennzeichnet, daß** jeweils innerhalb des von einem Aggregat (2) erzeugten Flüssigkeitsstroms das Strömungsverhalten der Flüssigkeit überwacht wird.

2. Verfahren nach Anspruch 1, **dadurch gekennzeichnet, daß** die Überwachung des Flüssigkeitsstroms anhand des vom Aggregat (2) erzeugten Strahls erfolgt.

3. Verfahren nach Anspruch 1, **dadurch gekennzeichnet, daß** bei Verwendung einer Kreiselpumpe (2) als Strahl ausbringendes Aggregat das Saugverhalten der Kreiselpumpe (2) im Ansaugbereich (9) überwacht wird.

4. Verfahren nach Anspruch 1, **dadurch gekennzeichnet, daß** bei Verwendung einer Kreiselpumpe (2) das Strömungsverhalten der Flüssigkeit in den von der Kreiselpumpe (2) durch Sog oder Druck beschickten Rohrleitungen (3, 4, 6, 7, 14) überwacht wird.

5. Verfahren nach Anspruch 4, **dadurch gekennzeichnet, daß** das Strömungsverhalten der Flüssigkeit in der zwischen der Kreiselpumpe (2) und einer Engstelle (6) verlaufenden Rohrleitung (4; 14) überwacht wird.

6. Einrichtung zur Durchführung eines Verfahrens nach einem der Ansprüche 1 bis 5, **gekennzeichnet durch** eine Messung, die das Strömungsverhalten direkt erfaßt.

7. Einrichtung zur Durchführung eines Verfahrens nach einem der Ansprüche 1 bis 5, **gekennzeichnet durch** eine Messung, die das Strömungsverhalten indirekt, d.h. in Verbindung mit einem Rechenverfahren, erfaßt.

8. Einrichtung zur Durchführung des Verfahrens nach Anspruch 2, **gekennzeichnet durch** einen am Boden (1) des Behälters angeordneten, den vom Aggregat (2) ausgebrachten Strahl überwachenden Strömungswächter.

9. Einrichtung zur Durchführung des Verfahrens nach Anspruch 4 oder 5, **gekennzeichnet durch** einen oder mehrere Drucksensoren, die das Strömungsverhalten der Flüssigkeit in der Rohrleitung (3, 6, 7 bzw. 4; 14) überwachen.

10. Einrichtung zur Durchführung des Verfahrens nach Anspruch 4 oder 5, **gekennzeichnet durch** einen oder mehrere Strömungswächter, die das Strömungsverhalten der Flüssigkeit in der Rohrleitung (3, 6, 7 bzw. 4; 14) überwachen.

11. Einrichtung zur Durchführung eines Verfahrens nach einem der Ansprüche 1 bis 5, **gekennzeichnet durch** einen an der Außenseite einer Rohrleitung (3, 6, 7 bzw. 4; 14) angeordneten berührungslosen Strömungswächter (10), welcher über eine elektrische Leitung (8) mit einem Anzeigegerät verbunden ist.

12. Einrichtung nach Anspruch 11, **dadurch gekennzeichnet, daß** der Strömungswächter (10) durch einen Ultraschall-Strömungssensor gebildet wird.

13. Einrichtung nach einem der vorangegangenen Ansprüche, **gekennzeichnet durch** ein Anzeigegerät (12; 15), welches in Abhängigkeit voreingestellter Meßwerte die **durch** die Überwachung gelieferten Meßdaten als Betriebszustände "Einwandfreier Durchfluß", "Teilweise Verstopfung" und "Betriebsstörung / Verstopfung" anzeigt.

14. Einrichtung nach einem der vorangegangenen Ansprüche, **dadurch gekennzeichnet, daß** bei Reinigungs- und oder Belüftungsanlagen mit mehreren Düsen (6) ein zentrales Anzeigegerät (15) für sämtliche Düsen (6) vorgesehen ist.

15. Einrichtung nach einem der vorangegangenen Ansprüche, **dadurch gekennzeichnet, daß** die verschiedenen, das Strömungsverhalten einzelner oder mehrerer Anlagen messenden Meßorgane durch einen Datenbus mit einem der Auswertung und Anzeige dienenden Computer verbunden sind.

16. Einrichtung nach einem der vorangegangenen Ansprüche, **dadurch gekennzeichnet, daß** die verschiedenen, das Strömungsverhalten einzelner oder mehrerer Anlagen messenden Meßorgane durch Funk mit einem der Auswertung und Anzeige dienenden Computer verbunden sind.

17. Einrichtung nach einem der vorangegangenen Ansprüche, **dadurch gekennzeichnet, daß** die verschiedenen, das Strömungsverhalten einzelner oder mehrerer Anlagen messenden Meßorgane über das Internet mit einem der Auswertung und Anzeige dienenden Computer verbunden sind.

18. Einrichtung nach einem der vorangegangenen Ansprüche, **dadurch gekennzeichnet, daß** in dem jeweils einer Engstelle (6) vorgelagerten Rohrbereich ein Putzstück (5) angeordnet ist, nach dessen Öffnen etwaige Verstopfungen im Bereich der Düse (6) zu beseitigen sind.
